# EUROPEAN PATENT APPLICATION

(11) **EP 4 513 382 A1**
(43) Date of publication of application: **26.02.2025**
(21) Application number: 23790222.6
(22) Date of filing: 06.04.2023
(51) Int. Cl.: G06N 3/0464, G06F 17/10

(54) **INFORMATION PROCESSING DEVICE, INFORMATION PROCESSING METHOD, INFORMATION PROCESSING PROGRAM, SOFTWARE CREATION DEVICE, SOFTWARE CREATION METHOD, AND SOFTWARE CREATION PROGRAM**

(30) Priority: 21.04.2022 JP 2022069885
(71) Applicant: Hitachi, Ltd., Tokyo 100-8280 (JP)
(72) Inventor: SHIMAMURA, Kotaro, Tokyo 100-8280 (JP); IKEDA, Naohiro, Tokyo 100-8280 (JP); OOMI, Taishi, Tokyo 100-8280 (JP)
(74) Representative: Mewburn Ellis LLP
(86) International application number: PCT/JP2023/014229
(87) International publication number: WO 2023/204041

(57) **Abstract**

A processing time of neural network processing is shortened. An information processing apparatus includes a processor and a memory. The processor executes neural network processing including convolution processing of performing a product-sum operation between a plurality of pieces of input data and a plurality of pieces of weight data and generating a plurality of pieces of intermediate data, and activation function processing of calculating a value of a predetermined function using the plurality of pieces of intermediate data as an input and generating a plurality of pieces of output data. The processor executes the activation function processing within loop processing of the convolution processing.

## Description

### Technical Field

The present invention relates to an information processing apparatus, an information processing method, an information processing program, a software creation apparatus, a software creation method, and a software creation program.

### Background Art

As a first conventional example of a neural network processing apparatus that performs information processing by using a neural network that simulates the structure of nerve cells of a human brain, there is a neural network processing apparatus disclosed in PTL 1. The neural network processing apparatus recognizes an image or the like by combining a plurality of layers that execute convolution processing of performing a product-sum operation between a plurality of pieces of input data and a plurality of pieces of weight data to generate a plurality of pieces of intermediate data and activation function processing of calculating a predetermined function using the plurality of pieces of intermediate data as inputs to generate a plurality of pieces of output data. In addition, in this conventional example, it is described that the convolution processing is executed at high speed by using a circuit incorporating a large number of arithmetic units called graphics processing unit (GPU).

In addition, as a second conventional example of the neural network processing apparatus, there is a neural network processing apparatus described in PTL 2. The neural network processing apparatus can perform processing at high speed by providing a dedicated inference operation unit including a matrix operation unit and an activation function operation unit.

### Citation List

### Patent Literature

PTL 1: JP 2019-87072 A
PTL 2: JP 2020-112901 A

### Summary of Invention

### Technical Problem

The neural network processing apparatus is increasingly used in an environment with limited operation resources, such as recognition processing of a surrounding image captured by a camera in an automatic driving device of an automobile. In addition, in the automatic driving device of an automobile or the like, recognition processing for a wide surrounding range is required, and there is a possibility that an error in a recognition result directly leads to an accident, so that high recognition accuracy is required. Due to such a background, the neural network processing has a complicated configuration, and it is necessary to perform recognition processing on a large number of images, so that the amount of operation becomes enormous. When an enormous amount of operation is processed with limited operation resources, a processing time becomes longer than expected, and there is a problem that necessary processing performance cannot be obtained.

Although the processing time is shortened using a GPU in the first conventional example, the effect of shortening the processing time is limited in the processing of software on general-purpose hardware, and there are many cases where the necessary processing performance cannot be achieved. Since the second conventional technique is provided with the dedicated inference operation unit, there is a possibility that the processing time can be shortened as compared with the case of using a GPU. However, since it takes enormous development cost to develop the dedicated inference operation unit, it is difficult to apply the second conventional technique to a device with a small shipping quantity. Therefore, there is a need to shorten the processing time in a case where the neural network processing is performed by software on general-purpose hardware.

In order to cope with such a situation, an object of the present invention is to shorten a processing time of neural network processing.

### Solution to Problem

In order to solve the above-described problem, an information processing apparatus according to the present invention is an information processing apparatus including a processor and a memory. The processor executes neural network processing including convolution processing of performing a product-sum operation between a plurality of pieces of input data and a plurality of pieces of weight data and generating a plurality of pieces of intermediate data, and activation function processing of calculating a value of a predetermined function using the plurality of pieces of intermediate data as an input and generating a plurality of pieces of output data, and executes the activation function processing within loop processing of the convolution processing.

### Advantageous Effects of Invention

According to the present invention, the capacity of the intermediate data is reduced, so that the intermediate data can be stored inside a processing unit, and data transfer between the processing unit and an external memory is reduced, whereby the processing time of the neural network processing can be shortened.

### Brief Description of Drawings

[FIG. 1] FIG. 1 is a diagram illustrating a configuration of a neural network processing apparatus according to a first embodiment.
[FIG. 2] FIG. 2 is a diagram illustrating a configuration of neural network processing.
[FIG. 3] FIG. 3 is a diagram illustrating an algorithm for processing one layer of the neural network processing according to a first conventional technique.
[FIG. 4] FIG. 4 is a diagram illustrating a processing mode at the time of execution of an algorithm of the neural network processing according to the first conventional technique.
[FIG. 5] FIG. 5 is a diagram illustrating an algorithm for processing one layer of neural network processing according to the first embodiment.
[FIG. 6] FIG. 6 is a diagram illustrating a processing mode at the time of execution of the algorithm of the neural network processing according to the first embodiment.
[FIG. 7] FIG. 7 is a diagram illustrating an algorithm for processing one layer of neural network processing according to a second conventional technique.
[FIG. 8] FIG. 8 is a diagram illustrating a processing mode at the time of execution of an algorithm of the neural network processing according to the second conventional technique.
[FIG. 9] FIG. 9 is a diagram illustrating an algorithm for processing one layer of neural network processing according to a second embodiment.
[FIG. 10] FIG. 10 is a diagram illustrating a processing mode at the time of execution of the algorithm of the neural network processing according to the second embodiment.
[FIG. 11] FIG. 11 is a diagram illustrating an algorithm for processing one layer of neural network processing according to a third embodiment.
[FIG. 12] FIG. 12 is a diagram illustrating a processing mode at the time of execution of the algorithm of the neural network processing according to the third embodiment.
[FIG. 13] FIG. 13 is a diagram illustrating an example of parameters corresponding to variations of an algorithm for performing product-sum operation processing according to a fourth embodiment.
[FIG. 14] FIG. 14 is a diagram illustrating an example of parameters corresponding to variations of an algorithm for performing activation function processing according to the fourth embodiment.
[FIG. 15] FIG. 15 is a diagram illustrating an example of combinations of parameters of the product-sum operation processing and the activation function processing for each layer of the neural network processing according to the fourth embodiment.
[FIG. 16] FIG. 16 is a diagram illustrating a result obtained by selecting combinations of parameters obtained by excluding duplicates from the combinations of parameters according to the fourth embodiment.
[FIG. 17] FIG. 17 is a diagram illustrating a hardware example of a computer that executes software creation processing according to the fourth embodiment.
[FIG. 18] FIG. 18 is a flowchart illustrating the software creation processing according to the fourth embodiment.

### Description of Embodiments

Hereinafter, embodiments according to the present disclosure will be described with reference to the drawings. The following embodiments are examples for describing the present invention including the drawings, and are omitted and simplified as appropriate for clarity of description. The present invention can be implemented in various other forms. Unless otherwise specified, each component may be singular or plural.

In the following embodiments, processing executed by a program may be described. A computer such as a server or a client executes a program by a processor (for example, a central processing unit (CPU) or a GPU), and performs a processing step defined by the program using a storage resource (for example, a memory), an interface device (for example, a communication port), and the like. Therefore, the subject of the processing performed by executing the program may be a processor. Similarly, the subject of the processing performed by executing the program may be a controller, an apparatus, a system, a computer, or a node having a processor. The subject of the processing performed by executing the program may be an operation unit, and may include a dedicated circuit that performs specific processing. Here, the dedicated circuit is, for example, a field programmable gate array (FPGA), an application specific integrated circuit (ASIC), a complex programmable logic device (CPLD), a quantum computer, or the like.

The program may be installed on the computer from a program source. The program source may be, for example, a program distribution server or a computer-readable storage medium. When the program source is a program distribution server, the program distribution server may include a processor and a storage resource that stores a distribution target program, and the processor of the program distribution server may distribute the distribution target program to another computer. In addition, in the embodiments, two or more programs may be realized as one program, or one program may be realized as two or more programs.

In the following embodiments, a "YYY (processing) unit," a "YYY step," and a "YYY procedure" are corresponding components of different categories of apparatuses (or systems), methods, and programs, respectively. For example, a processor or computer that executes the "YYY step" corresponds to the "YYY processing unit". In addition, the "YYY procedure" executed by the processor or the computer corresponds to the "YYY step".

In the following embodiment, in a case where there is a plurality of components having the same or similar functions, the same reference numerals may be attached with different subscripts for description. In addition, in a case where it is not necessary to distinguish the plurality of components, the description may be given with the subscript omitted.

In the following embodiments, the "software" may be a component including other files such as a program and a library, or may be a program itself.

### [First Embodiment]

### (Configuration of information processing apparatus 10 according to first embodiment)

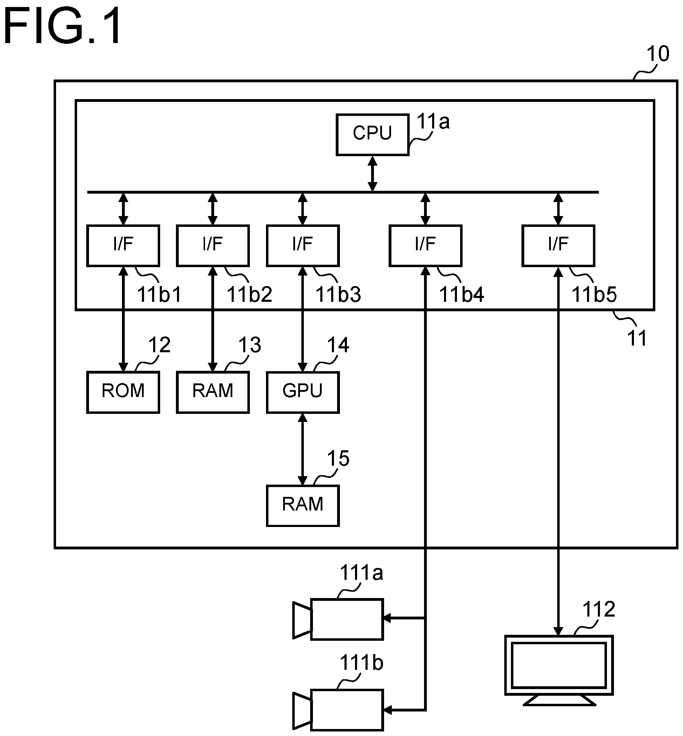

FIG. 1 is a diagram illustrating a configuration of an information processing apparatus 10 according to a first embodiment. The information processing apparatus 10 includes a microprocessor 11, a read only memory (ROM) 12, random access memories (RAM) 13 and 15, and a GPU 14.

The microprocessor 11 includes a CPU 11a and interface circuits 11b1, 11b2, 11b3, 11b4, and 11b5.

The ROM 12 is connected to the microprocessor 11 via the interface circuit 11b1. The RAM 13 is connected to the microprocessor 11 via the interface circuit 11b2. The GPU 14 is connected to the RAM 15. In addition, the GPU 14 is connected to the microprocessor 11 via the interface circuit 11b3.

Cameras 111a and 111b are connected to the microprocessor 11 via the interface circuit 11b4. A display device 112 is connected to the microprocessor 11 via the interface circuit 11b5.

The information processing apparatus 10 inputs image data from the cameras 111a and 111b, performs recognition by neural network processing, and then causes the display device 112 to display a recognition result. The recognition result may be output by voice from a speaker. Note that the present embodiment illustrates an example of performing image recognition, but the present invention is not limited to image recognition, and can be applied to other general neural network processing such as voice recognition.

The cameras 111a and 111b capture images in different directions. As a result, it is possible to capture all images of a region to be recognized and perform recognition processing. In addition, a camera having a large number of pixels and a wide photographing range may be used as the cameras 111a and 111b. As a result, even in a case where the region to be recognized is wide, it is possible to cover the whole region with a small number of cameras. In this case, an image captured by one camera may be divided into a plurality of regions, and the recognition processing may be performed separately for each. As a result, it is possible to perform the recognition processing only on a necessary region, excluding a region, which does not require recognition, such as sky.

The microprocessor 11 is a large scale integration (LSI) in which the CPU 11a and the interface circuits 11b1,11b2,11b3,11b4, and 11b5 are integrated on one chip. This configuration is an example, and a part or all of the ROM 12, the RAM 13, the GPU 14, and the RAM 15 may be built in the microprocessor 11.

The CPU 11a reads and executes software stored in the ROM 12 via the interface circuit 11b1. Note that since the ROM 12 often has a lower reading/writing speed than the RAM 13, the software may be copied from the ROM 12 to the RAM 13 at the time of activation, and then the software may be read from the RAM 13. The CPU 11a performs the following series of processing in accordance with the software read from the ROM 12 or the RAM 13.

First, the CPU 11a acquires image data from the cameras 111a and 111b via the interface circuit 11b4, and stores the image data in the RAM 13 via the interface circuit 11b2. Next, the CPU 11a reads the image data stored in the RAM 13 via the interface circuit 11b2, and transfers the image data to the GPU 14 via the interface circuit 11b3.

Next, the CPU 11a reads the software stored in the ROM 12 via the interface circuit 11b1 or the software stored in the RAM 13 via the interface circuit 11b2, and transfers the software to the GPU 14 via the interface circuit 11b3. Then, the CPU 11a instructs the GPU 14 to start operation by software.

Next, when receiving the notification of the end of the operation from the GPU 14 via the interface circuit 11b3, the CPU 11a acquires an operation result from the GPU 14 via the interface circuit 11b3, and stores the operation result in the RAM 13 via the interface circuit 11b2.

Next, the CPU 11a reads the operation result of the GPU 14 from the RAM 13 via the interface circuit 11b2, performs predetermined processing, and then causes the display device 112 via the interface circuit 11b5 to display the result.

When receiving the image data from the CPU 11a via the interface circuit 11b3, the GPU 14 stores the image data in the RAM 15. In addition, when receiving the software from the CPU 11a via the interface circuit 11b3, the GPU 14 executes the software and stores an operation result in the RAM 15.

In addition, when receiving a request to read the operation result from the CPU 11a via the interface circuit 11b3, the GPU 14 reads the operation result from the RAM 15 and outputs the operation result to the CPU 11a via the interface circuit 11b3.

### (Neural network processing)

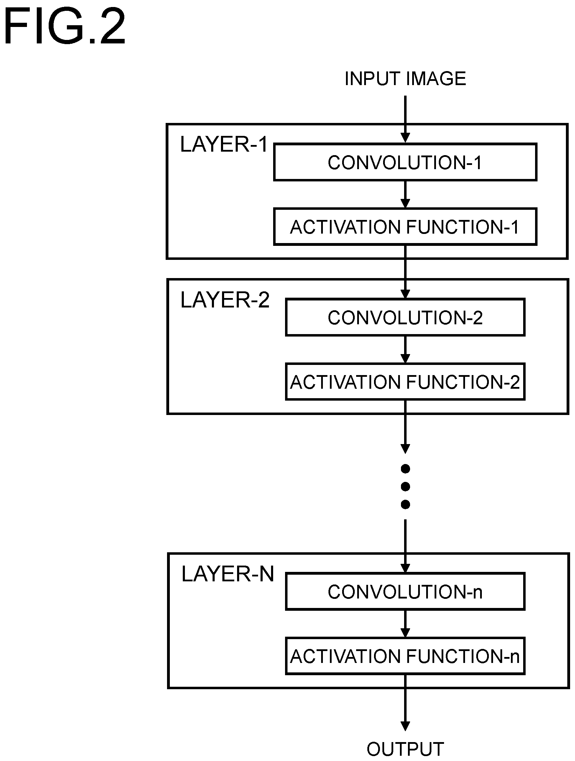

FIG. 2 is a diagram illustrating a configuration of neural network processing. Note that FIG. 2 illustrates recognition processing for a single input image, and in a case where the recognition processing is performed for a plurality of images, the processing of FIG. 2 is executed for each input image. At that time, the content of the processing may be the same for all the images, or may be different for each image according to the purpose of the recognition processing.

The neural network processing illustrated in FIG. 2 includes N layers of layers i (layer 1, layer 2, ..., layer N). The layer 1 inputs an input image and outputs a processing result to the layer 2. The layer (i+1) (i = 1, 2, ..., N-2) receives data from the previous layer i and outputs a processing result to the layer (i+2). The layer N receives data from the previous layer (N-1) and outputs a processing result as a recognition result of the input image.

Each of the N layers i includes convolution processing and activation function processing. Details of the convolution processing and the activation function processing will be described later.

### (Layer processing of neural network processing according to first conventional technique as comparative example)

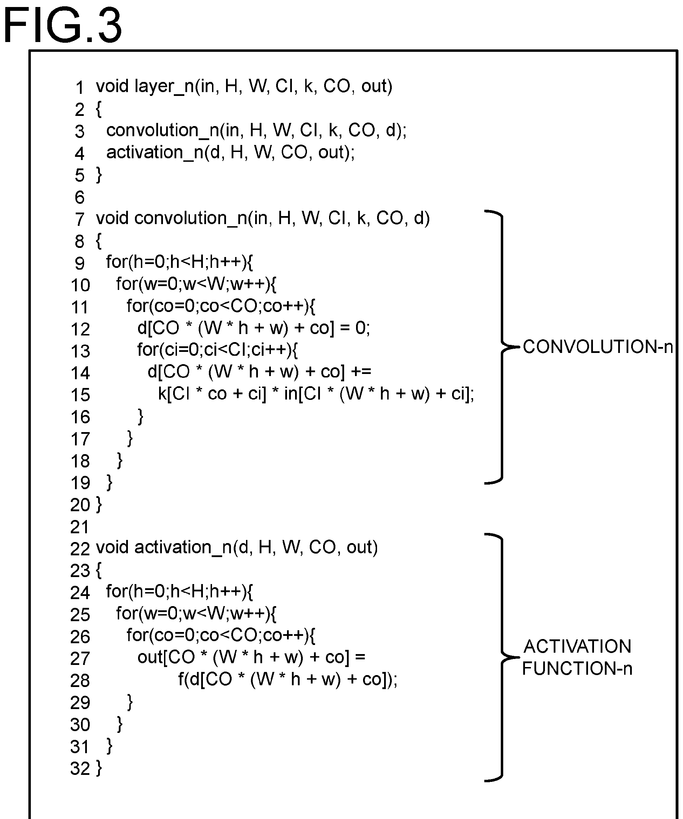

Here, neural network processing according to a first conventional technique that is a comparative example of the first embodiment will be described. FIG. 3 is a diagram illustrating an algorithm for processing one layer of the neural network processing according to the first conventional technique. Hardware that executes the neural network processing of the first conventional technique is similar to that of the information processing apparatus 10 of the first embodiment.

When executing the layer processing (layer_n()) of the n-th layer (n = 1, 2,..., N) illustrated in FIG. 3, the CPU 11a activates the convolution processing (convolution_n()) of lines 7 to 20 and the activation function processing (activation_n()) of the 22 to 32 lines. In the convolution processing (convolution_n()), a product-sum operation between the input data (in[]) and the weight data (k[]) is performed to generate intermediate data (d[]). In the activation function processing (activation_n()), the intermediate data (d[]) is used as input, and the value of a predetermined function (f()) is calculated to generate output data (out[]).

The convolution_n() and the activation_n() are executed by the GPU 14. The present invention is not limited thereto, and the convolution_n() and the activation_n() may be executed by the CPU 11a.

An argument "H" of the convolution_n() and the activation_n() indicates the number of pixels in the vertical direction of the image. Loop processing regarding a variable h on lines 9 to 19 of FIG. 3 indicates processing for each coordinate in the vertical direction of the image. In addition, an argument "W" indicates the number of pixels in the horizontal direction of the image. Loop processing regarding a variable "w" on lines 10 to 18 of FIG. 3 indicates processing for each coordinate of the horizontal method of the image.

In addition, an argument "CO" indicates the number of types of attribute information of each pixel of the output data. Loop processing regarding a variable "co" on lines 11 to 17 of FIG. 3 indicates processing for each type of attribute information of a single pixel of the output data. The value of the argument "CO" is often several tens to several hundreds.

In addition, an argument "CI" indicates the number of types of attribute information of each pixel of the input data. Loop processing regarding a variable "ci" on lines 13 to 16 of FIG. 3 indicates processing for each type of attribute information of a single pixel of the input data. The value of the argument "CI" is generally 3 (corresponding to three primary colors of R (red), G (green), and B (blue)) in the layer 1 in which the input image is used as the input data. In other than the layer 1, an output of a previous layer is used as an input, so that the number of layers is often several tens to several hundreds.

In addition, an argument "k" is weight data of the layer n to be processed.

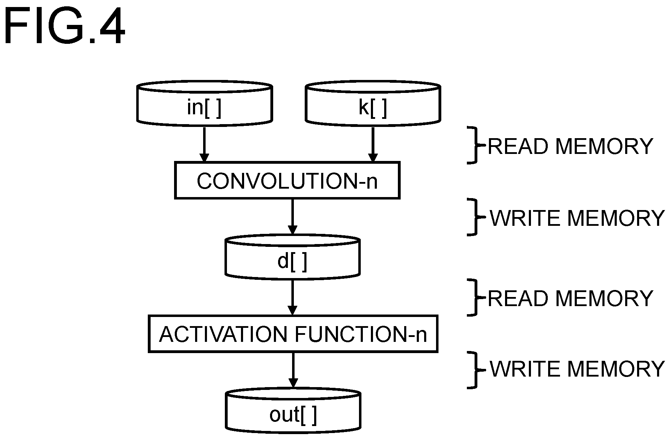

FIG. 4 is a diagram illustrating a processing mode at the time of execution of an algorithm of the neural network processing according to the first conventional technique. As illustrated in FIG. 4, in the convolution processing (convolution_n()), the input data (in[]) and the weight data (k[]) are read from a memory, and the intermediate data d[] is written to the memory.

The memory includes a cache memory built in the processing unit (the GPU 14 in the present embodiment) and an external memory (the RAM 15 in the present embodiment) connected to the outside of the processing unit. For example, in a case where image recognition processing or the like is performed, the input data (in[]) and the intermediate data (d[]) have a large capacity and thus cannot be stored in the cache memory, and access to the external memory occurs.

The inventor of the present application has found that the data transfer between the processing unit and the external memory takes more time than that between the processing unit and the cache memory, and the processing time of the data transfer between the processing unit and the external memory is a non-negligible amount compared to the operation processing itself. The same applies to the activation function processing (activation_n()), and the processing time for data transfer between the processing unit and the external memory is a non-negligible amount compared to the operation processing itself.

That is, in the first conventional technique, it has been found that data transfer between the GPU 14 and the RAM 15 occurs in reading of input data (in[]) and writing of intermediate data (d[]) in the convolution processing (convolution_n()), and reading of intermediate data (d[]) and writing of output data (out[]) in the activation function processing (activation_n()), resulting in a bottleneck in the neural network processing performed by software on general-purpose hardware such as the GPU 14.

### (Layer processing of neural network processing according to first embodiment)

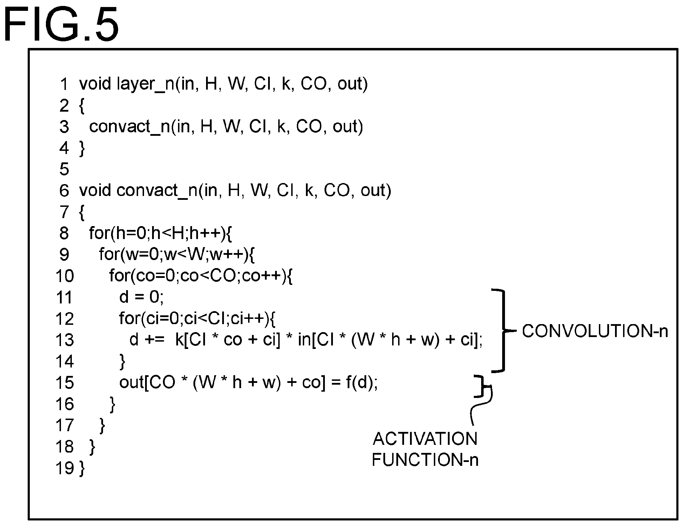

FIG. 5 is a diagram illustrating an algorithm for processing one layer of neural network processing according to the first embodiment. When executing the layer processing (layer_n()) illustrated in FIG. 5, the CPU 11a only activates processing (convact_n()) in which the convolution processing and the activation function processing are fused, as compared with FIG. 3.

As illustrated in FIG. 5, in the loop processing regarding the variable "co" on the 10 to 16 lines, every time the loop processing regarding the variable "ci" on lines 12 to 14 is ended, the activation function processing on the 15th line is performed on the intermediate data (d) to generate the output data (out[]).

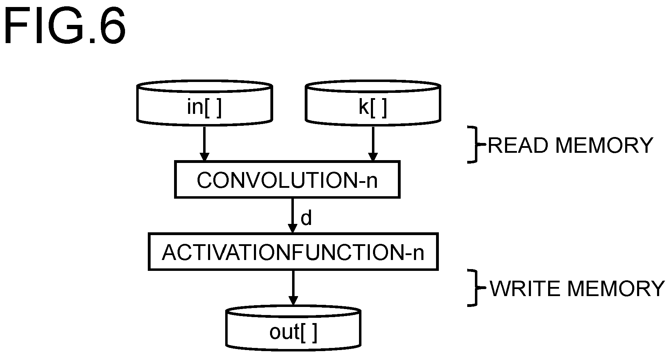

FIG. 6 is a diagram illustrating a processing mode at the time of execution of the algorithm of the neural network processing according to the first embodiment. In the algorithm of the neural network processing according to the first embodiment illustrated in FIG. 5, unlike the algorithm of the first conventional technique illustrated in FIG. 3, the intermediate data is stored in a one-dimensional variable d that is not an array. Therefore, the intermediate data can be held in the GPU 14 (for example, a cache memory), and data transfer from/to the RAM 15 becomes unnecessary. Therefore, the amount of data transfer between the GPU 14 and the RAM 15 is reduced, and the processing time can be shortened.

### [Second Embodiment]

### (Layer processing of neural network processing according to second conventional technique as comparative example)

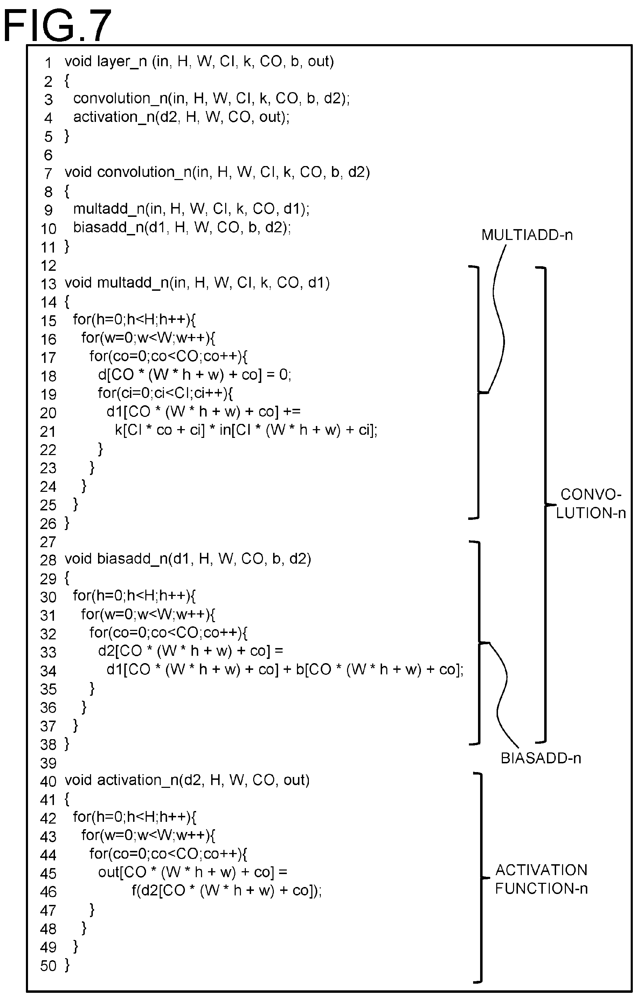

First, neural network processing according to a second conventional technique that is a comparative example of the second embodiment will be described. FIG. 7 is a diagram illustrating an algorithm for processing one layer of the neural network processing according to the second conventional technique. In the algorithm according to the first conventional technique in FIG. 3, the convolution processing is configured only by the product-sum operation. On the other hand, in the algorithm according to the second conventional technique in FIG. 7, bias value addition processing of lines 13 to 38 is added to the convolution processing of lines 28 to 38 in FIG. 7. The bias value addition processing is processing of adding the bias value for each layer of the neural network including N layers to the operation result of the product-sum operation. As a result, it is known that there is a case where the recognition result is improved.

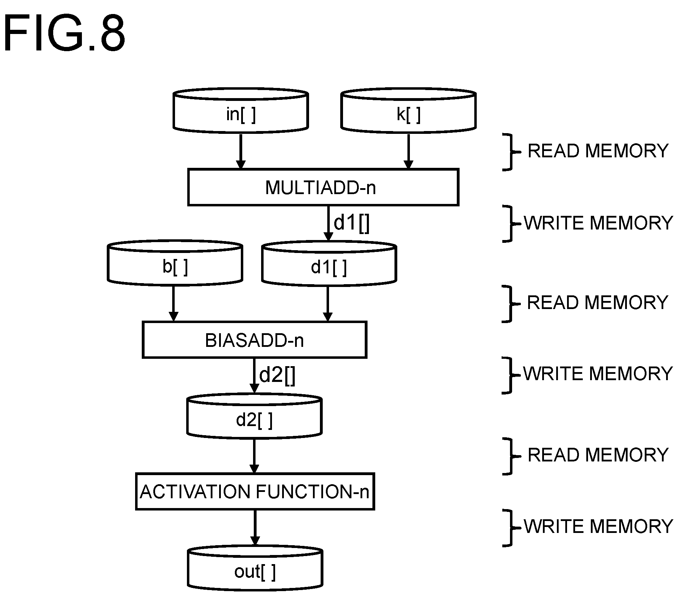

FIG. 8 is a diagram illustrating a processing mode at the time of execution of an algorithm of the neural network processing according to the second conventional technique. As compared with FIG. 4, the processing of reading the input data (b[], d1[]) of the bias addition from the RAM 15 and writing the operation result (d2[]) of the bias addition to the RAM 15 is added, so that the processing time of the data transfer between the GPU 14 and the RAM 15 increases.

### (Layer processing of neural network processing according to second embodiment)

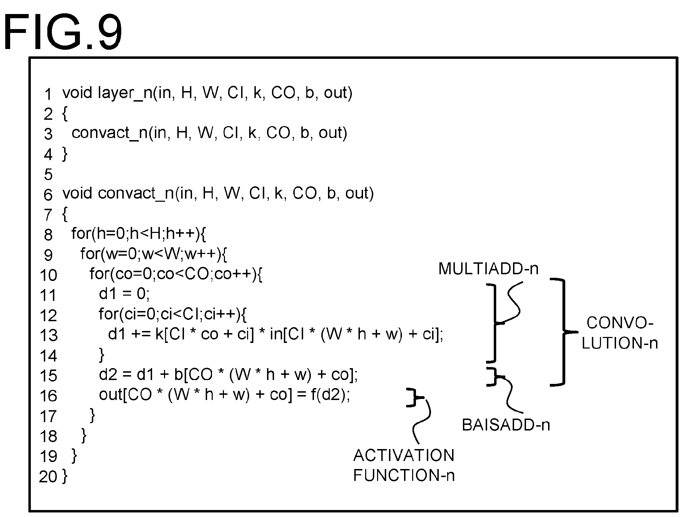

FIG. 9 is a diagram illustrating an algorithm for processing one layer of the neural network processing according to the second embodiment. In the present embodiment, the product-sum operation (multiadd_n() in lines 13 to 26 in FIG. 7) in FIG. 7, the bias addition (Biasadd_n() in lines 28 to 38 in FIG. 7), and the activation function processing (activation_n() in lines 40 to 50 in FIG. 7) are executed in one loop processing (lines 8 to 19 in FIG. 9).

As illustrated in FIG. 9, in the loop processing regarding the variable "co" in the 10 to 17 lines, every time the loop processing regarding the variable "ci" in lines 12 to 14 is ended, the bias value (b[]) to the intermediate data (d1) as in line 15 are added to calculate the intermediate data (d2). Then, as in the 16th line, the activation function processing in the 15th line is performed on the intermediate data (d2) to generate the output data (out[]).

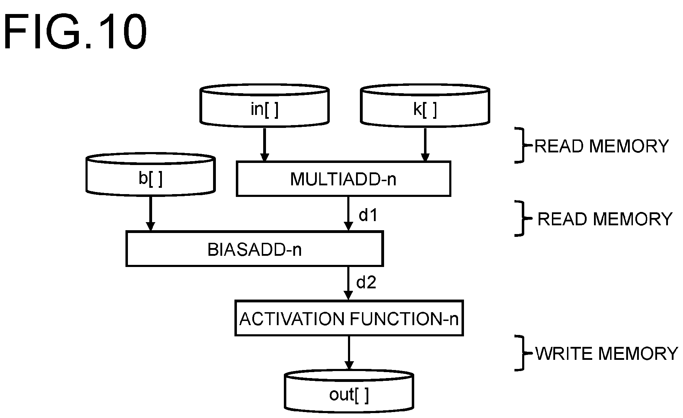

FIG. 10 is a diagram illustrating a processing mode at the time of execution of the algorithm of the neural network processing according to the second embodiment. Unlike the algorithm of the second conventional technique illustrated in FIG. 7, the algorithm of the neural network processing according to the second embodiment illustrated in FIG. 9 stores two types of intermediate data in one-dimensional variables d1 and d2 that are not arrays, respectively. Therefore, the intermediate data d1 and d2 can be held inside the GPU 14 (for example, in a cache memory), and data transfer to/from the RAM 15 becomes unnecessary. Thus, the amount of data transfer between the GPU 14 and the RAM 15 is reduced, and the processing time can be shortened.

### [Third Embodiment]

### (Layer processing of neural network processing according to third embodiment)

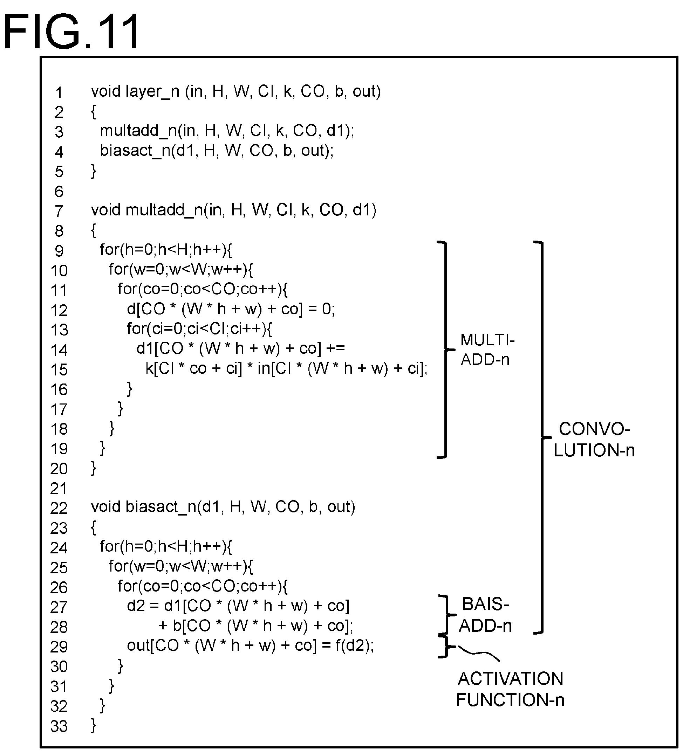

FIG. 11 is a diagram illustrating an algorithm for processing one layer of neural network processing according to a third embodiment. As illustrated in FIG. 11, unlike the algorithm of the second embodiment in FIG. 9, in the algorithm of the neural network processing according to the third embodiment, only the product-sum operation is executed in different loop processing (lines 8 to 19), and the bias value addition processing and the activation function processing are executed in one loop processing (lines 24 to 32).

In general, the product-sum operation has a large amount of operation and a large ratio of processing time to the entire neural network processing, so that the processing time is often shortened by using an optimized library provided by a GPU manufacturer or the like. In the case of the algorithm of the second embodiment in FIG. 9, the bias value addition processing and the activation function processing are incorporated in the same loop processing as the product-sum operation, so that the library of the product-sum operation cannot be used, and the processing time of the product-sum operation may be longer than that in the case of using the library. On the other hand, in the case of the algorithm of the present embodiment in FIG. 11, only the processing part of the product-sum operation can be replaced with the library, and an increase in the processing time of the product-sum operation can be prevented.

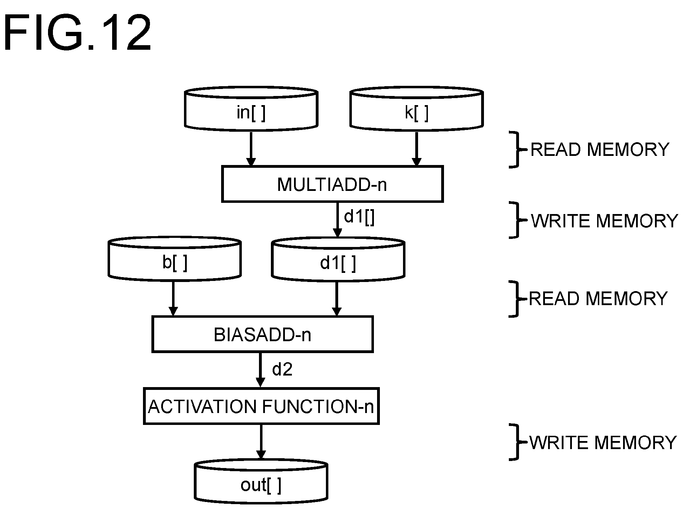

FIG. 12 is a diagram illustrating a processing mode at the time of execution of the algorithm of the neural network processing according to the third embodiment. In the neural network processing according to the present embodiment, it is unnecessary to write the processing result (d2) of the bias value addition processing (biasadd-n()) to the memory and read the processing result (d2) from the memory as compared with the second conventional technique in FIG. 8, and thus, the amount of data transfer between the GPU 14 and the RAM 15 is reduced, and the processing time can be shortened. In addition, in the neural network processing according to the present embodiment, the processing of writing and reading the processing result (d1[]) of the product-sum operation (multiadd-n()) to and from the memory increases as compared with the second embodiment in FIG. 10, and thus, the amount of data transfer between the GPU 14 and the RAM 15 increases, and the processing time also increases. However, the library can be used for the product-sum operation (multiadd-n()), and an increase in the processing time of the product-sum operation can be prevented, so that there is a possibility that the total processing time can be reduced as compared with the second embodiment in FIG. 10.

### [Fourth Embodiment]

In the embodiment according to the disclosure of the present application, the convolution processing and the activation function processing are executed in one loop processing. Therefore, when there are a plurality of variations in each of the convolution processing and the activation function processing, it is necessary to describe a number of pieces of processing corresponding to a product of the number of variations of the convolution processing and the number of variations of the activation function processing at the time of creating software of the neural network processing, and there is a possibility that it takes a huge amount of time to create the software and confirm the operation.

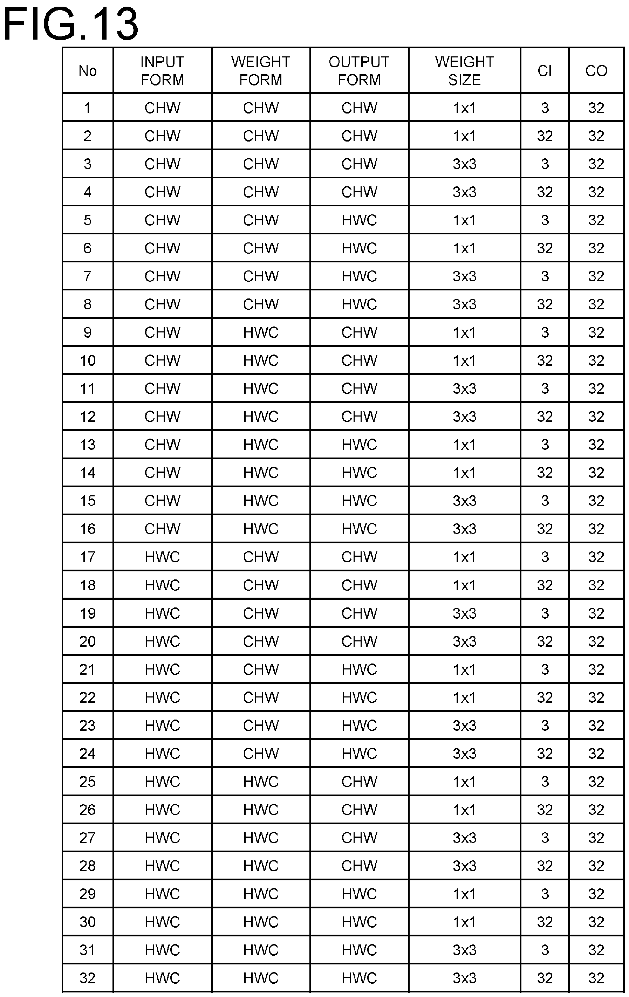

Regarding the convolution processing, it is known that there are many variations in the algorithm of the product-sum operation processing which is a part thereof. FIG. 13 is a diagram illustrating an example of parameters corresponding to variations of an algorithm for performing product-sum operation processing according to a fourth embodiment.

"INPUT FORM (input format)" in FIG. 13 indicates an arrangement order of input data, and there are two types of "CHW" and "HWC". In "CHW", first, data is arranged on the axis of the type of the attribute information, next, data is arranged on the vertical axis of the image between pieces of data having the same value of the axis of the type of the attribute information, and finally, data is arranged on the horizontal axis of the image between pieces of data having the same values of the axis of the type of the attribute information and the vertical axis of the image.

In "HWC", first, data is arranged on the vertical axis of the image, next, data is arranged on the horizontal axis of the image between pieces of data having the same value of the vertical axis of the image, and finally, data is arranged on the axis of the type of the attribute information between pieces of data having the same values of the vertical axis of the image and the horizontal axis of the image.

Note that the algorithms illustrated in FIGS. 3, 5, 7, 9, and 11 are software having an input format corresponding to "HWC", and cannot be applied when the input format is "CHW".

"WEIGHT FORM (weight format)" in FIG. 13 indicates an arrangement order of weight data, and there are two types of "CHW" and "HWC". The meanings of "CHW" and "HWC" are similar to the input form. The algorithms illustrated in FIGS. 3, 5, 7, 9, and 11 are software having a weight format corresponding to "HWC", and cannot be applied when the weight format is "CHW".

"OUTPUT FORM (output format)" in FIG. 13 indicates an arrangement order of output data, and there are two types of "CHW" and "HWC". The meanings of "CHW" and "HWC" are similar to the input form. The algorithms illustrated in FIGS. 3, 5, 7, 9, and 11 are software having an output format corresponding to "HWC", and cannot be applied when the output format is "CHW".

"WEIGHT SIZE (weight size)" in FIG. 13 indicates a range of pixels of the input data that affects each pixel of the output data. In the algorithms illustrated in FIGS. 3, 5, 7, 9, and 11, each pixel of the output data is affected only by pixels having the same values of the vertical and horizontal axes of the input data. This is denoted as "1x1" in FIG. 13. In addition to this, there is also a calculation method that is affected by input data of four sides of three pixels in which the pixel having the same values of the vertical and horizontal axes extends the range thereof by one pixel up and down, and this is expressed as "3x3" in FIG. 13.

"CI" in FIG. 13 is the number of types of the attribute information of each pixel of the input data, and as described in FIG. 3, can take 3 in the layer 1, and values of several tens to several hundreds in other layers. Here, only two types of "3" and "32" are described for convenience of space.

"CO" in FIG. 13 is the number of types of the attribute information of each pixel of the output data, and can take values of several tens to several hundreds as described in FIG. 3. Here, only one type of "32" is described for the sake of space.

Although not all the variations of the algorithm for performing the product-sum operation processing in FIG. 13 are included, there are still 32 variations.

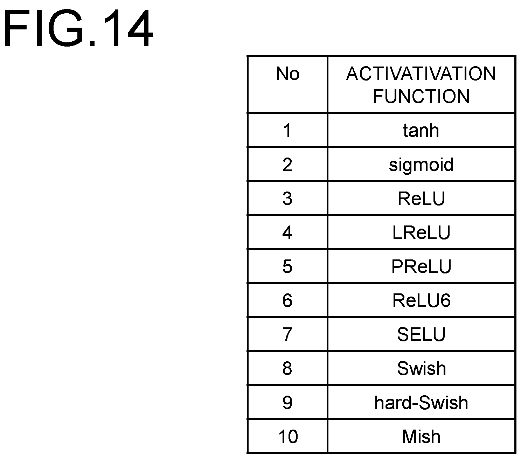

FIG. 14 is a diagram illustrating an example of parameters corresponding to variations of an algorithm for performing activation function processing according to the fourth embodiment. In FIG. 14, the names of the respective activation functions are illustrated, and the calculation formulas of the functions are omitted. Although FIG. 14 does not cover all the variations, there are still 10 variations.

When variations of the product-sum operation processing illustrated in FIG. 13 and variations of the activation function processing illustrated in FIG. 14 are multiplied, 320 variations are obtained. This means that it is necessary to describe 320 types of processing in order to execute the convolution processing and the activation function processing in one loop processing. Therefore, it is considered that it takes a huge amount of time to perform software creation and operation check for the neural network processing including the product-sum operation processing having the variation of FIG. 13 and the activation function processing having the variation of FIG. 14.

In order to cope with this problem, a method can be considered which describes processing for only necessary combinations depending on an application. A development flow will be described below.

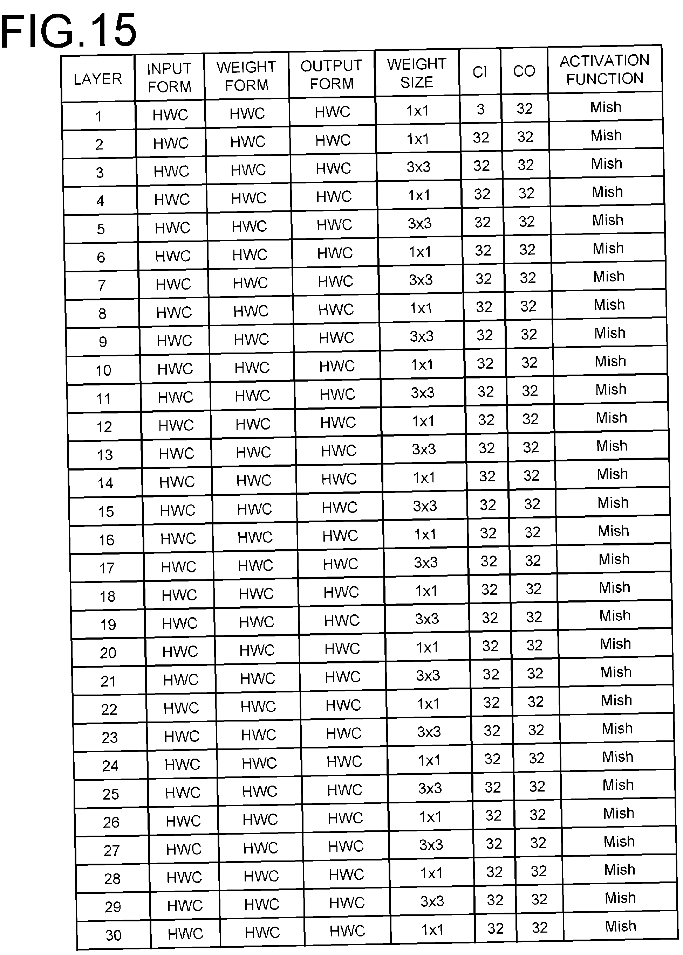

FIG. 15 is a diagram illustrating an example of a set of parameters of the product-sum operation processing and the activation function processing for each layer of the neural network processing according to the fourth embodiment. In a case where complicated recognition processing is performed, 100 or more layers are often executed, but here, an example in which the number of layers is 30 has been described for the sake of space. As can be seen from FIG. 15, there are a plurality of layers having the same combination of parameters.

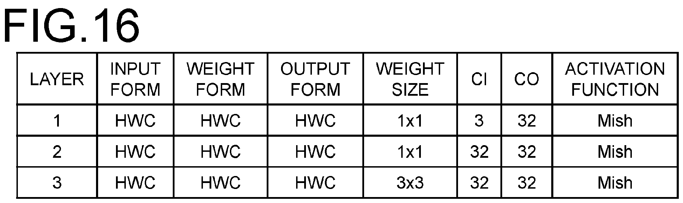

FIG. 16 is a diagram illustrating a result obtained by selecting combinations of parameters obtained by excluding duplicates from the combinations of parameters according to the fourth embodiment. As illustrated in FIG. 16, as the result obtained by selecting the combinations of parameters obtained by excluding duplicates from the combinations of parameters in FIG. 15, it can be confirmed that the combinations of parameters are narrowed down to three types. Therefore, in a case where the convolution processing and the activation function processing are executed in one loop processing, it is found that it is sufficient to describe three types of software.

In a case where a GPU manufacturer provides a library, it is not clear which combination of convolution and activation functions the user uses, so it is necessary to create described software corresponding to all 320 variations. Such enormous variations may cause a bottleneck, and it may be difficult to create a library. On the other hand, in a case where the embodiment according to the present disclosure is implemented from the viewpoint of the user, it is sufficient to describe processing only in necessary combinations depending on the application, and thus, it is sufficient to narrow down to, for example, three combinations of parameters according to FIG. 16 and create software, so that it is possible to significantly shorten the time required for creating a description of software.

### (Hardware of computer 100 executing software creation method according to fourth embodiment)

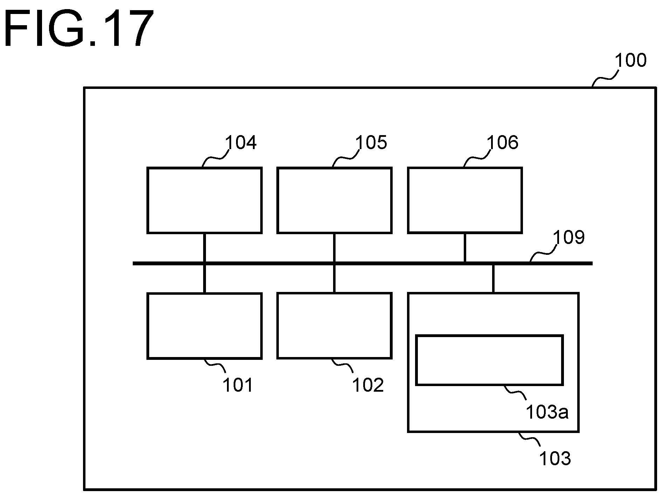

FIG. 17 is a hardware diagram illustrating a configuration example of a computer 100 that executes a software creation method according to the fourth embodiment.

The computer 100 is a computer including a processor 101 including a CPU, a main storage device 102, an auxiliary storage device 103, a network interface 104, an input device 105, and an output device 106 which are connected to one another via an internal communication line 109 such as a bus.

The processor 101 controls the operation of the entire computer 100. The main storage device 102 includes, for example, a volatile semiconductor memory, and is used as a work memory of the processor 101. The auxiliary storage device 103 includes a large-capacity nonvolatile storage device such as a hard disk device, a solid state drive (SSD), or a flash memory, and is used to hold various programs and data for a long period of time.

A software creation program 103a stored in the auxiliary storage device 103 is loaded into the main storage device 102 when the computer 100 is activated or when necessary, and the processor 101 executes the software creation program 103a loaded into the main storage device 102, thereby implementing a software creation apparatus that executes a software creation method.

Note that the software creation program 103a may be recorded in a non-transitory recording medium, read from the non-transitory recording medium by a medium reading device, and loaded into the main storage device 102. Alternatively, the software creation program 103a may be acquired from an external computer via a network and loaded into the main storage device 102.

The network interface 104 is an interface device for connecting the computer 100 to each network in the system or communicating with another computer. The network interface 104 includes, for example, a network interface card (NIC) such as a wired local area network (LAN) or a wireless LAN.

The input device 105 includes a keyboard, a pointing device such as a mouse, and the like, and is used by the user to input various instructions and information to the computer 100. The output device 106 includes, for example, a display device such as a liquid crystal display or an organic electro luminescence (EL) display, or an audio output device such as a speaker, and is used to present necessary information to the user when necessary.

### (Software creation processing according to fourth embodiment)

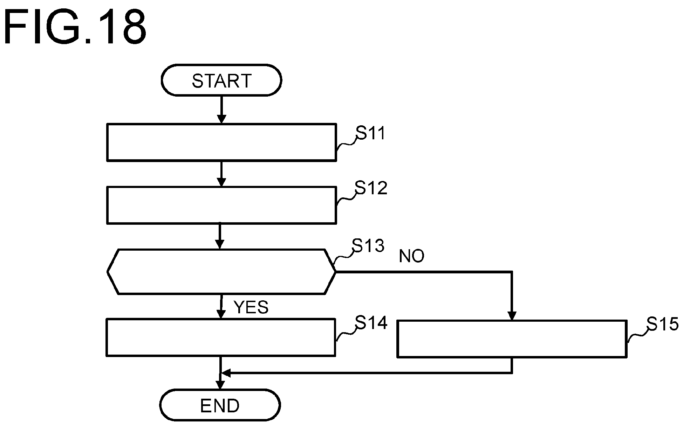

FIG. 18 is a flowchart illustrating software creation processing according to the fourth embodiment.

First, in step S11, the computer 100 executes a first step of creating a list of combinations of parameters of the convolution processing and the activation function processing for each of a plurality of layer processing of a target neural network.

Next, in step S12, the computer 100 executes a second step of selecting combinations of parameters obtained by excluding duplicates from the list of parameters created in step S11.

Next, in step S13, the computer 100 determines whether the software to be created is for inference. If the software to be created is for inference processing (step S13: YES), the computer 100 proceeds the processing to step S14, and if the software to be created is for learning processing (step S13: NO), the computer proceeds the processing to step S15.

In step S14, the computer 100 executes a third step of creating a program for executing the activation function processing within the loop processing of the convolution processing with respect to the convolution processing and the activation function processing corresponding to the combinations of parameters selected in step S13.

On the other hand, in step S15, the computer 100 executes a fourth step of creating a program for executing the activation function processing within the loop processing different from the convolution processing with respect to the convolution processing and the activation function processing corresponding to the combinations of parameters selected in step S13.

Note that some or all of steps S11 to S15 may be manually executed.

According to the present embodiment, at the time of creating software for neural network processing, it is sufficient to narrow down combinations of parameters and create software, and thus, it is possible to significantly shorten the time required for creating software and an operation test.

### (Other embodiments)

Note that, as another embodiment for reducing the time required to create a description of software, there is also a viewpoint of focusing on an application in which neural network processing is used. In general, the neural network processing is used for two types of applications: learning processing and inference processing. In the learning processing, known data is input as input data, and weight data is adjusted such that the output data approaches an expected value. On the other hand, in the inference processing, unknown data is input as input data, and output data is used as a recognition result. The learning processing is usually performed in a server rich in calculation resources in many cases, and the constraint of the processing time is loose. Therefore, the necessity of shortening the processing time is relatively small.

On the other hand, there is a case where the inference processing is executed by equipment mounted on an automobile or the like, for example, and there is a case where calculation resources are limited. In addition, in a case where a recognition result is used to control equipment as in automatic driving or the like, the equipment can be controlled in a timely manner, so that the processing time is relatively tightly restricted. Therefore, the necessity of shortening the processing time is relatively high. In this regard, when the embodiment according to the present disclosure is applied to the software used for the inference processing to shorten the processing time, and the existing software is used for the software used for the learning processing without applying the embodiment according to the present disclosure, it is possible to shorten the time required for creating the software while satisfying the needs.

In the embodiment according to the disclosure of the present application, there is a case where creation of software for executing activation processing in a loop of a convolution operation of inference is a burden on a user, and an effect of achieving both a processing speed and a recognition accuracy in an edge terminal such as an in-vehicle device of an automobile or the like is obtained. In the embodiment according to the present disclosure, it is possible to reduce the burden on the user in creating the software by providing the program creation method of narrowing down the combinations of duplicate parameters in the fourth embodiment to reduce the number of algorithms of the software to be created.

The present invention is not limited to the above-described embodiments, and includes various modifications. For example, the above-described embodiments have been described in detail for easy understanding of the invention and are not necessarily limited to those having all the described configurations. In addition, as long as there is no contradiction, a part of the configuration of a certain embodiment can be replaced with the configuration of another embodiment, and the configuration of another embodiment can be added to the configuration of a certain embodiment. In addition, it is possible to add, delete, replace, integrate, or distribute a configuration for a part of the configuration of each embodiment. In addition, the configuration and processing described in the embodiments can be appropriately distributed, integrated, or exchanged on the basis of processing efficiency or mounting efficiency.

### Reference Signs List

10 information processing apparatus
100 computer

## Claims

1. An information processing apparatus comprising a processor and a memory,
wherein the processor executes neural network processing including
convolution processing of performing a product-sum operation between a plurality of pieces of input data and a plurality of pieces of weight data and generating a plurality of pieces of intermediate data, and
activation function processing of calculating a value of a predetermined function using the plurality of pieces of intermediate data as an input and generating a plurality of pieces of output data, and
the processor executes the activation function processing within loop processing of the convolution processing.

2. The information processing apparatus according to claim 1, wherein in the loop processing, every time the product-sum operation is performed to generate one piece of intermediate data of the plurality of pieces of intermediate data, the processor performs the activation function processing to calculate the value of the predetermined function using the one piece of intermediate data as an input and generate one piece of output data of the plurality of pieces of output data.

3. The information processing apparatus according to claim 1, wherein
the convolution processing includes bias value addition processing of adding a bias value to a result of the product-sum operation, and
the bias value addition processing is executed within same loop processing as the activation function processing.

4. An information processing apparatus comprising a processor and a memory,
wherein the processor executes neural network processing including
convolution processing of performing a product-sum operation between a plurality of pieces of input data and a plurality of pieces of weight data and generating a plurality of pieces of intermediate data, and
activation function processing of calculating a value of a predetermined function using the plurality of pieces of intermediate data as an input and generating a plurality of pieces of output data,
the convolution processing includes bias value addition processing of adding a bias value to a result of the product-sum operation,
the processor executes the bias value addition processing within same loop processing as the activation function processing, and
the processor executes the bias value addition processing and the activation function processing within loop processing different from the convolution processing.

5. The information processing apparatus according to any one of claims 1 to 4, wherein
the plurality of pieces of input data are a plurality of pieces of image data corresponding to a plurality of ranges, and
the output data is a processing result of image recognition for the plurality of pieces of image data.

6. An information processing method executed by an information processing apparatus including a processor and a memory, the information processing method comprising:
a neural network processing step including
a convolution processing step in which the processor performs a product-sum operation between a plurality of pieces of input data and a plurality of pieces of weight data and generates a plurality of pieces of intermediate data, and
an activation function processing step in which the processor calculates a value of a predetermined function using the plurality of pieces of intermediate data as an input and generates a plurality of pieces of output data,
wherein the processor executes the activation function processing step within loop processing of the convolution processing step.

7. An information processing method executed by an information processing apparatus including a processor and a memory, the information processing method comprising:
a neural network processing step including
a convolution processing step in which the processor performs a product-sum operation between a plurality of pieces of input data and a plurality of pieces of weight data and generates a plurality of pieces of intermediate data, and
an activation function processing step in which the processor calculates a value of a predetermined function using the plurality of pieces of intermediate data as an input and generates a plurality of pieces of output data,
wherein the convolution processing step includes a bias value addition processing step of the processor adding a bias value to a result of the product-sum operation,
the processor executes the bias value addition processing step within same loop processing as the activation function processing step, and
the processor executes the bias value addition processing step and the activation function processing step within loop processing different from the convolution processing step.

8. An information processing program for causing a computer having a processor and a memory to execute:
a neural network processing procedure including
a convolution processing procedure of performing a product-sum operation between a plurality of pieces of input data and a plurality of pieces of weight data and generating a plurality of pieces of intermediate data, and
an activation function processing procedure of calculating a value of a predetermined function using the plurality of pieces of intermediate data as an input and generating a plurality of pieces of output data,
wherein the activation function processing procedure is executed within loop processing of the convolution processing procedure.

9. An information processing program for causing a computer having a processor and a memory to execute:
a neural network processing procedure including
a convolution processing procedure of performing a product-sum operation between a plurality of pieces of input data and a plurality of pieces of weight data and generating a plurality of pieces of intermediate data, and
an activation function processing procedure of calculating a value of a predetermined function using the plurality of pieces of intermediate data as an input and generating a plurality of pieces of output data,
wherein the convolution processing procedure includes a bias value addition processing procedure of adding a bias value to a result of the product-sum operation,
the processor is caused to execute the bias value addition processing procedure within same loop processing as the activation function processing procedure, and
the processor is caused to execute the bias value addition processing procedure and the activation function processing procedure within loop processing different from the convolution processing procedure.

10. A software creation apparatus that creates software for causing an information processing apparatus to execute neural network processing of performing recognition processing for input data by combining multiple instances of layer processing each including convolution processing of performing a product-sum operation between a plurality of pieces of the input data and a plurality of pieces of weight data and generating a plurality of pieces of intermediate data, and activation function processing of calculating a value of a predetermined function using the plurality of pieces of intermediate data as an input and generating a plurality of pieces of output data, the software creation apparatus comprising:
a first processing unit that creates a list of combinations of parameters of the convolution processing and the activation function processing of each instance of the layer processing;
a second processing unit that selects a combination of parameters obtained by excluding duplicates from the list; and
a third processing unit that creates software for executing the activation function processing within loop processing of the convolution processing with respect to the convolution processing and the activation function processing corresponding to the combination of the parameters selected by the second processing unit.

11. The software creation apparatus according to claim 10, wherein
at the time of creating software for inference processing in which unknown data is input as the plurality of pieces of input data and the plurality of pieces of output data are used as a recognition result, the third processing unit creates software for executing the activation function processing within the loop processing of the convolution processing with respect to the convolution processing and the activation function processing corresponding to the combination of the parameters selected by the second processing unit, and
at the time of creating software of learning processing in which known data is input as the plurality of pieces of input data and the plurality of pieces of weight data are adjusted such that the plurality of pieces of output data approach an expected value, the third processing unit creates software for executing the activation function processing within loop processing different from the convolution processing with respect to the convolution processing and the activation function processing corresponding to the combination of the parameters selected by the second processing unit.

12. A software creation method in which a computer including a processor and a memory creates software for causing an information processing apparatus to execute neural network processing of performing recognition processing for input data by combining multiple instances of layer processing each including convolution processing of performing a product-sum operation between a plurality of pieces of the input data and a plurality of pieces of weight data and generating a plurality of pieces of intermediate data, and activation function processing of calculating a value of a predetermined function using the plurality of pieces of intermediate data as an input and generating a plurality of pieces of output data, the software creation method comprising:
a first step in which the computer creates a list of combinations of parameters of the convolution processing and the activation function processing of each instance of the layer processing;
a second step in which the computer selects a combination of parameters obtained by excluding duplicates from the list; and
a third step in which the computer creates software for executing the activation function processing within loop processing of the convolution processing with respect to the convolution processing and the activation function processing corresponding to the combination of the parameters selected by the second step.

13. A software creation program for causing a computer including a processor and a memory to create software for causing an information processing apparatus to execute neural network processing of performing recognition processing for input data by combining multiple instances of layer processing each including convolution processing of performing a product-sum operation between a plurality of pieces of the input data and a plurality of pieces of weight data and generating a plurality of pieces of intermediate data, and activation function processing of calculating a value of a predetermined function using the plurality of pieces of intermediate data as an input and generating a plurality of pieces of output data, the software creation program for causing the computer to execute:
a first procedure of creating a list of combinations of parameters of the convolution processing and the activation function processing of each instance of the layer processing;
a second procedure of selecting a combination of parameters obtained by excluding duplicates from the list; and
a third procedure of creating software for executing the activation function processing within loop processing of the convolution processing with respect to the convolution processing and the activation function processing corresponding to the combination of the parameters selected by the second procedure.

14. A software creation method that creates software for causing an information processing apparatus to execute neural network processing of performing recognition processing for input data by combining multiple instances of layer processing each including convolution processing of performing a product-sum operation between a plurality of pieces of the input data and a plurality of pieces of weight data and generating a plurality of pieces of intermediate data, and activation function processing of calculating a value of a predetermined function using the plurality of pieces of intermediate data as an input and generating a plurality of pieces of output data, the software creation method comprising:
a first step of creating a list of combinations of parameters of the convolution processing and the activation function processing of each instance of the layer processing;
a second step of selecting a combination of parameters obtained by excluding duplicates from the list; and
a third step of creating software for executing the activation function processing within loop processing of the convolution processing with respect to the convolution processing and the activation function processing corresponding to the combination of the parameters selected by the second step.
